# NEUE EUROPÄISCHE PATENTSCHRIFT

(11) **EP 0 792 773 B2**
(45) Veröffentlichungstag und Bekanntmachung des Hinweises auf die Entscheidung über den Einspruch: **16.10.2002**
(45) Hinweis auf die Patenterteilung: 03.05.2000
(21) Anmeldenummer: 97103140.6
(22) Anmeldetag: 26.02.1997
(51) Int. Cl.: B60R 21/22, B60R 21/20

(54) **Airbagmodul mit einem aus mehreren voneinander trennbaren Gehäuseteilen bestehenden Gehäuse**
Airbag module housing assembly with a multiplicity of separable components
Module pour coussin d'air à boîtier constitué d'une multitude de pièces détachables

(30) Priorität: 27.02.1996 DE 19607342
(43) Veröffentlichungstag der Anmeldung: 03.09.1997
(73) Patentinhaber: TAKATA-PETRI (Ulm) GmbH, 89081 Ulm (DE)
(72) Erfinder: Wittmann, Robert, 89233 Neu-Ulm (Reutti) (DE); Settele, Martin, 89160 Tomerdingen (DE); Müller, Frank, 89134 Blaustein (Herrlingen) (DE); Früh, Hans-Jürgen, 89188 Merklingen (DE); Niederkorn, Serge, 89075 Ulm (DE)
(74) Vertreter: Maikowski, Michael, Dipl.-Ing. Dr.

(56) Entgegenhaltungen:
- EP-A- 0 618 110
- GB-A- 2 281 259
- US-A- 4 536 008
- PATENT ABSTRACTS OF JAPAN vol. 095, no. 009, 31.Oktober 1995 & JP 07 164997 A (HONDA MOTOR CO LTD), 27.Juni 1995,
- PATENT ABSTRACTS OF JAPAN vol. 018, no. 653 (M-1720), 12.Dezember 1994 & JP 06 255438 A (TAKATA KK;OTHERS: 01), 13.September 1994,

## Beschreibung

Die Erfindung betrifft einen Airbagmodul nach dem Oberbegriff des Patentanspruchs 1.

Insbesondere bei Seiten-Airbagmodulen besteht das den Gassack und den Generatorträger einschließenden Gehäuse im allgemeinen aus zwei gelenkig miteinander verbundenen Gehäusehälften, die an der vom Gelenk abgewandten Verbindungsstelle durch Haltemittel so miteinander verbunden sind, daß sie sich bei Zündung des Gasgenerators und Aufblähen des Gassackes zur Freigabe des Gassackes voneinander trennen können. Aus der gattungsbildenden GB 2 281 259 A ist es bereits bekannt, die beiden Gehäusehälften durch Schnappmittel miteinander zu verbinden, welche nach Einbringen des den Generator tragenden Generatorträgers und des gefalteten Gassackes ein problemloses Zusammenklipsen der beiden Gehäuseteile ermöglichen. Die Schnappmittel sind weiter so ausgebildet, daß sie sich bei Zündung des Generators und Aufblähen des Gassackes nach Vorliegen einer vorbestimmten Minimalöffnungskraft wieder voneinander lösen, so daß die beiden Gehäuseteile sich voneinander trennen und den Gassack zum Aufblähen in die Umgebung freigeben.

Ein Problem bei diesen bekannten Airbagmodulen besteht darin, daß die Kraft, bei der die Haltemittel die Gehäuseteile voneinander freigegeben werden, schwer genau einzustellen ist, so daß es auch beim normalen Gebrauch des Fahrzeuges, in welches der Airbagmodul eingebaut ist, z.B. durch Erschütterungen zu einem ungewollten Öffnen des Gehäuses kommen kann.

Das Ziel der vorliegenden Erfindung besteht darin, einen Airbagmodul der eingangs genannten Gattung zu schaffen, bei dem zwar die Montage durch einfaches Zusammenklipsen der miteinander das Gehäuse bildenden Gehäuseteile möglich ist, jedoch ein ungewolltes Öffnen des Gehäuses im normalen Fahrzeugbetrieb sicher unterbunden ist.

Zur Lösung dieser Aufgabe sind die Merkmale des kennzeichnenden Teil des Anspruches 1 vorgesehen.

Der Erfindungsgedanke ist also darin zu sehen, daß zwar nach wie vor Schnappmittel verwendet werden, welche ein einfaches Zusammenklipsen der mehreren, insbesondere beiden Gehäuseteile gestatten. Die komplementäre Formgebung der beiden zusammenwirkenden Haltemittel ist jedoch erfindungsgemäß so, daß beim Versuch, die mehreren insbesondere beiden zusammengeklipsten Gehäuseteile wieder voneinander zu trennen, die Klips- bzw. Schnappverbindung sich nicht mehr lösen kann, weil die beiden Haltemittel nach Art einer Verriegelung durch reine Zugkräfte untrennbar miteinander verbunden sind. Stattdessen weist eines der beiden Schnappmittel eine Sollbruchstelle auf, so daß bei Zündung des Generators und dem damit verbundenen Aufblähen des Gassackes nach Vorliegen einer vorbestimmten Öffnungskraft die Sollbruchstelle bricht und das betreffende Haltemittel sich von dem zugeordneten Gehäuseteil löst, während die eigentliche Verriegelungsverbindung zwischen den beiden Haltemitteln aufrechterhalten bleibt. Da die Brechkraft einer Sollbruchstelle sehr genau vorherbestimmt und insbesondere vergleichsweise groß gemacht werden kann, besteht bei dem erfindungsgemäßen Airbagmodul keine Gefahr, daß während der Montage oder beim normalen Fahrzeugbetrieb eine Lösung der Haltemittel voneinander selbsttätig erfolgt. Erst im Gefahrenfalle bei Zündung des Generators wird ein Bruch der Sollbruchstelle hervorgerufen.

Besonders bevorzugt ist die Weiterbildung nach Anspruch 2, wobei hier das durch Brechen der Sollbruchstelle freigewordene Haltemittel beim Aufblähen des Gassackes nicht von dem Gehäuse weg in Richtung des Fahrzeuginsassen geschleudert werden kann. Der diesbezügliche Erfindungsgedanke ist also darin zu sehen, daß das durch Aufbrechen der Sollbruchstelle freigewordene Haltemittel von dem anderen Haltemittel so sicher gehalten wird, daß es an dem betreffenden Gehäuseteil verbleibt und nicht durch Umherfliegen Schaden anrichten kann.

Eine praktische Ausführungsform dieser Weiterbildung ist durch Anspruch 3 gekennzeichnet.

Eine besonders bevorzugte praktische Ausführungsform bei einem Seiten-Airbagmodul entnimmt man Anspruch 4.

Die Erfindung wird im folgenden beispielsweise anhand der Zeichnung beschrieben; in dieser zeigt:
- Figur 1: eine schematische perspektivische Darstellung eines erfindungsgemäßen Seiten-Airbagmoduls unter Weglassung des Gassakkes bei teilweise geöffnetem Gehäuse,
- Figur 2: eine Teildraufsicht auf das Gehäuse nach Figur 1 im Bereich eines Haltemittelpaares in vergrößertem Maßstab, wobei die Haltemittel im noch nicht miteinander verbundenen Zustand gezeigt sind, und
- Figur 3: einen Schnitt nach Linie III-III in Figur2, wobei die Haltemittel im Eingriff miteinander dargestellt sind.

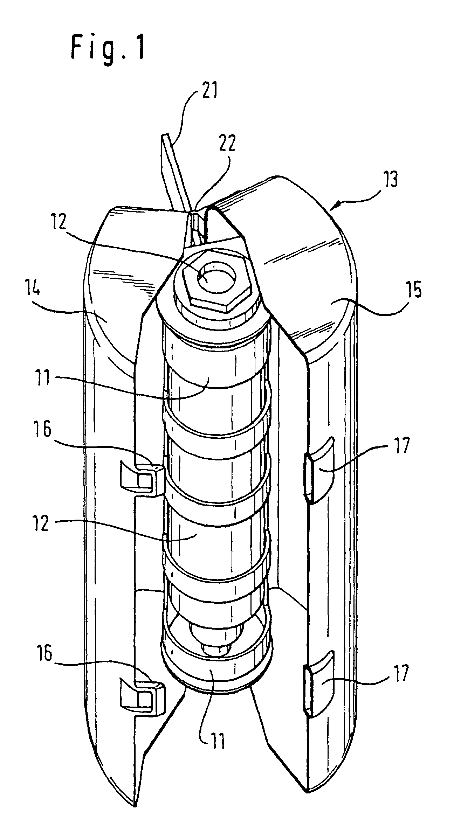

Nach Figur 1 ist ein kreiszylindrischer Gasgenerator 12 im Inneren eines kreiszylindrischen und mit Durchbrechungen versehenen Generatorträgers 11 angeordnet, der im axialen Abstand zwei Befestigungslaschen 21 aufweist, die sich senkrecht zur Zylinderachse vom Generatorträger 11 wegstrecken und zur Befestigung des Airbagmoduls an einem Fahrzeugteil dienen. Es handelt sich hier um einen Seiten-Airbagmodul, welcher vertikal in der der Fahrzeugaußenseite zugewandten Seite der Rückenlehne eines Fahrzeugsitzes angebracht wird, um bei einem Unfall die Seite des Fahrzeuginsassens vor Verletzungen zu schützen.

Auf die Laschen 21 aufgesetzt und an ihnen befestigt ist ein zylinderartiges Gehäuse 13, welches aus zwei Gehäusehälften 14, 15 besteht, die über ein sich im Bereich des Fußes der Laschen 21 befindendes Gelenk 22, dessen Achse parallel zur Zylinderachse verläuft, gelenkig miteinander verbunden sind. Auf der diametral gegenüberliegenden Seite sind an den beiden Gehäusehälften 14, 15 in axialem Abstand zwei Haltemittel in Form von Bügeln 16 bzw. Riegelzungen 17 vorgesehen.

In Figur 1 ist das Gehäuse 13 zur Veranschaulichung des Innenraums in etwas geöffnetem Zustand wiedergegeben.

Nach Einbringen des in Figur 1 nicht gezeigten Gassackes in das Gehäuse 13 werden die beiden Gehäusehälften 14, 15 um das Gelenk 22 gegeneinander geschwenkt, wobei die Bügel 16 und die Riegelzungen 17 miteinander in einen Schnappeingriff gelangen und das Gehäuse 13 verschlossen sowie die beiden Gehäusehälften 14, 15 in der Schließstellung gehalten werden.

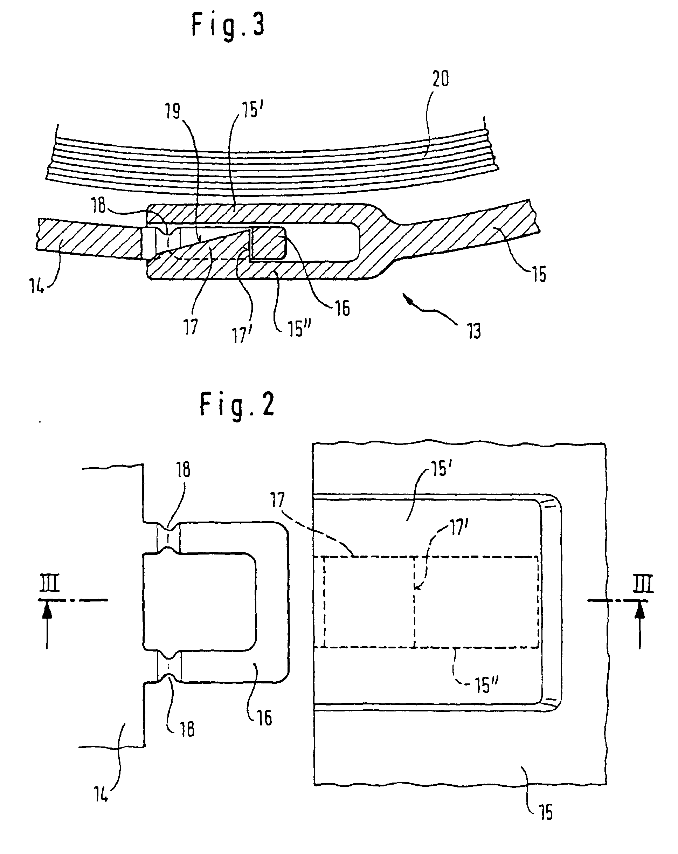

Nach den Figuren 2 und 3 ist die Riegelzunge 17 an einem radial federnden Arm 15" angebracht, der sich in Umfangsrichtung von der Gehäusehälfte 15 in Richtung der anderen Gehäusehälfte 14 erstreckt. In einem Abstand radial innerhalb vom Arm 15" erstreckt sich vom Gehäuseteil 15 ein Abdeckteil 15' in peripherer Richtung über die Riegelzunge 17 bis zur anderen Gehäusehälfte 14.

Vorzugsweise weisen die Bügel 16 nahe dem Übergang in die Gehäusehälfte 14 zwei Sollbruchstellen 18 auf.

Während in Figur 2 die beiden Gehäusehälften 14, 15 im noch unverbundenen Zustand gezeigt sind, gibt Figur 3 die beiden Haltemittel 16, 17 im Eingriffszustand wieder. In Figur 3 ist auch der Gassack 20 angedeutet, welcher in Figur 1 aus Gründen der Erkennbarkeit des Generatorträgers 11 und des Generators 12 weggelassen worden ist.

Nach Figur 3 weist die Riegelzunge 17 eine von der Gehäusehälfte 14 radial nach Innen ansteigende Auflauframpe 19 auf, die mit dem Bügel 16 zusammenwirkt.

Die Arbeitsweise des beschriebenen Airbagmoduls ist wie folgt:

Nach Einbringen des den Generator 12 enthaltenden Generatorträgers 11 und des ihn umgebenden Gassackes 20 in das geöffnete Gehäuse 13 werden die Gehäusehälften 14, 15 gegeneinander geschwenkt, wobei die Bügel 16 und die Riegelzungen 17 sich gemäß Figur 2 in axialer, radialer und peripherer Ausrichtung einander annähern und schließlich die Bügel 16 in die Schlitze zwischen den Abdeckteilen 15' und die Federarme 15" eintreten. Bei weiterem Nähern der Gehäuseteile 14, 15 läuft der Quersteg des Bügels 16 auf der Auflauframpe 19 der Riegelzunge 17 hoch und drückt dabei den Federarm 15" in Figur 3 federnd nach unten. In analoger Weise könnte auch das Abdeckteil 15' federnd ausgebildet sein und beim Einschieben des Bügels 16 federnd radial nach Innen ausweichen.

Ggf. können auch beide Elemente 15', 15" federnd ausgebildet sein.

Nachdem die Querstege der Bügel 16 jeweils den höchsten Punkt der Auflauframpen 19 erreicht haben, schnappen die Federarme 15" gemäß Figur 3 nach oben hinter die Querstege der Bügel 16, so daß die aus Figur 3 ersichtliche Relativposition jedes Bügels 16 und jeder Riegelzunge 17 erreicht wird.

Da in einer bevorzugten Ausgestaltung der Erfindung die Rückwand 17' der Auflauframpe 19 sich senkrecht zum Umfang des Gehäuses 13 im Bereich der Verbindung der beiden Gehäusehälften 14, 15 erstreckt, ist diese Verbindung beim Versuch, die beiden Gehäusehälften 14, 15 zu trennen, erfindungsgemäß unlösbar.

Wird nun der Generator 12 bei einem Unfall gezündet und bläht sich dementsprechend der Gassack 20 auf, so wird schließlich zwischen den beiden Gehäusehälften 14, 15 eine solche Trennkraft erzeugt, daß die Sollbruchstellen 18 am Fuß der Bügel 16 dieser Kraft nicht mehr standzuhalten vermögen und brechen. Die beiden Gehäusehälften sind jetzt auf der vom Gelenk 22 diametral abgewandten Seite voneinander getrennt und können beispielsweise in die aus Figur 1 ersichtliche Position oder auch noch in eine weiter geöffnete Position gelangen. Hierdurch kann sich der Gassack problemlos nach außen entfalten.

Aufgrund des Einschlusses jedes Bügels 16 zwischen dem Abdeckteil 15' und dem Federarm 15" ist hierbei wirksam vermieden, daß der Bügel 16 sich vom Gehäuse 13 löst und durch Herausfliegen aus dem Gehäuse 13 die Insassen gefährdet.

Das Gehäuse 13 ist innerhalb eines Fahrzeugsitzes unsichtbar montiert, wobei sich gegenüber der Verbindungsstelle zwischen den beiden Gehäusehälften 14, 15 im Bereich der Haltemittel 16, 17 eine Sollreißstelle im Bezug des Fahrzeugsitzes befindet, welche nach dem Brechen der Sollbruchstellen 18 und dem anschließenden Aufblähen des Gassackes 20 ebenfalls aufreist, um das Aufblähen des Gassackes in dem Raum vor der Rückenlehne zu ermöglichen.

Für die Erfindung ist es wichtig, daß die beiden Gehäusehälften 14, 15 durch Zusammenklipsen einfach und problemlos verbunden werden können, daß die Trennung aber nur durch Brechen der Sollbruchstellen 18 und nicht durch Öffnen der Schnappverbindungen 16, 17 erfolgen kann.

## Patentansprüche

1. Airbagmodul mit an einem Fahrzeugteil zu befestigendem Generatorträger (11), in bzw. an dem ein Generator (12) sowie ein aufblasbarer Gassack (20) angeordnet ist, der in ein allseits geschlossenes zylindrisches Gehäuse (13) eingeschlossen ist, welches aus zumindest zwei durch Haltemittel (16, 17) zusammengehaltenen Gehäuseteilen (14, 15) besteht, die bei Zündung des Generators (12) und durch den sich dadurch aufblähenden Gassack (20) unter Überwindung der von den Haltemitteln (16, 17) aufgebrachten Haltekraft zur Freigabe des Gassackes (20) voneinander trennbar sind, wobei die Haltemittel aus zumindest zwei komplementären, an jeweils einem Gehäuseteil (14, 15) befestigten Schnappmitteln (16, 17) bestehen, die beim Zusammenfügen der Gehäuseteile (14, 15) während der Montage zusammenkommen und dabei selbsttätig in eine Verriegelungsposition einschnappen,
**dadurch gekennzeichnet,**
**daß** die Schnappmittel bei Zündung des Generators (12) und den sich dabei aufblähenden Gassack (20) nicht voneinander trennbar sind, daß jedoch wenigstens eines der Schnappmittel (16, 17) wenigstens eine Sollbruchstelle (18) aufweist, deren Brechkraft auf die bei einer Zündung des Generators (12) erzeugte Druckkraft derart abgestimmt ist, daß die Sollbruchstelle/n (18) durch den sich aufblähenden Gassack (20) zerstört wird, so daß die Gehäuseteile (14, 15) sich voneinander entfernen und den Gassack (20) zum Aufblähen in die Umgebung freigeben, wobei die Schnappmittel aus einem an einem Gehäuseteil (14) über die Sollbruchstelle/n (18) befestigten, sich in Umfangsrichtung erstreckenden Bügel (16) und einer am anderen Gehäuseteil (15) befestigten, mit dem Bügel (16) zusammenpassenden Riegelzunge (17) mit Auflauframpe (19) bestehen.

2. Airbagmodul nach Anspruch 1
**dadurch gekennzeichnet,**
**daß** die Schnappmittel (16, 17) in der Verriegelungsstellung so zueinander und zu den Gehäuseteilen (14, 15) bzw. an diesen vorgesehenen Elementen (15', 15") angeordnet sind, daß sie nach Brechen der Sollbruchstelle/n (18) aneinander gehalten werden.

3. Airbagmodul nach Anspruch 1 und 2,
**dadurch gekennzeichnet,**
**daß** der Bügel (16) auf der von der Riegelzunge (17) abgewandten Seite von einem am zur Riegelzunge (17) gehörenden Gehäuseteil (15) vorgesehenen Abdeckteil (15') gegen Herausfallen nach Brechen der Sollbruchstelle (18) gesichert ist.

4. Airbagmodul nach einem der vorhergehenden Ansprüche,
**dadurch gekennzeichnet,**
**daß** ein im wesentlichen zylindrischer Generatorträger (11) mit Befestigungslaschen (21), in dem ein Generator (12) untergebracht ist, mit dem ihn umgebenden Gassack (20) in einem zylinderartigen Gehäuse (13) untergebracht ist, welches aus zwei Gehäusehälften (14, 15) besteht, die mittels eines Gelenks (22) entlang einer Erzeugenden des Zylinders aufklappbar miteinander verbunden sind, und daß an der dem Gelenk (22) diametral gegenüberliegenden Seite im axialen Abstand mehrere, vorzugsweise zwei Haltemittel (16, 17) an den Gehäusehälften (14, 15) angeordnet sind.

## Claims

1. Airbag module comprising a generator carrier (11) to be secured to a part of a vehicle and in which or on which a generator (12) and also an inflatable gas bag (20) are arranged, with the gas bag being enclosed in a cylindrical housing (13) closed on all sides and consisting of at least two housing parts (14, 15) which are held together by holding means (16, 17) and which can be separated from one another to release the gas bag (20) on triggering of the generator (12) and by the consequently inflating gas bag (20) while overcoming the holding force applied by the holding means (16, 17), with the holding means consisting of at least two complementary snap fastener means (16, 17) each secured to one housing part (14, 15) which, on assembling the housing parts (14, 15), come into engagement during the assembly and thereby automatically snap into a latched position, **characterized in that** the snap fastener means are not separable from one another on triggering of the generator (12) and by the consequently inflating gas bag (20), but **in that** at least one of the snap fastener means (16, 17) has at least one weak point (18) with the force required to fracture it being matched to the pressure force generated on triggering of the generator (12) in such a way that the weak point(s) (18) is destroyed by the inflating gas bag (20), so that the housing parts (14, 15) move apart from one another and free the gas bag (20) for inflation into the environment, the snap fastener means comprising a hoop (16) which extends in the circumferential direction and is secured to one housing part (14) via the weak point(s) (18), and a latching tongue (17) which is secured to the other housing part (15) and which fits together with the hoop (16), the latching tongue having a run-in ramp (19).

2. Airbag module according to Claim 1, **characterized in that**, in the latched position, the snap fastener means (16, 17) are so arranged relative to one another and to the housing parts (14, 15), or relative to elements (15', 15") provided thereon, that they are held together after the fracturing of the weak points(s) (18).

3. Airbag module according to Claim 1 and 2, **characterized in that** the hoop (16) is secured at the side remote from the latching tongue (17) against dropping out following fracture of the weak point (18) by means of a cover part (15') provided at the housing part (15) belonging to the latching tongue (17).

4. Airbag module according to one of the preceding claims, **characterized in that** a substantially cylindrical generator carrier (11) with fastening lugs (21) in which a generator (12) is accommodated is housed together with the gas bag (20) surrounding it in a cylinder-like housing (13) which consists of two housing halves (14, 15) which are connected together such that they can be swung open along a generatrix of the cylinder by means of a hinge (22) and **in that** a plurality of axially spaced apart holding means (16, 17), preferably two holding means, are provided on the housing halves (14, 15) at the side diametrically opposite to the hinge (22).

## Revendications

1. Module pour airbag comportant un support de générateur (11) à fixer à une partie de véhicule, dans lequel ou sur lequel sont disposés un générateur (12) ainsi qu'un sac de gaz gonflable (20), qui est enfermé dans un boîtier cylindrique (13) fermé de toutes parts, lequel se compose d'au moins deux parties de boîtier (14, 15) maintenues ensemble par des moyens de maintien (16, 17), qui sont séparables les uns des autres lors de l'allumage du générateur (12), par le gonflement du sac de gaz (20), la force de maintien assurée par les moyens de maintien (16, 17) étant surmontée en vue de libérer le sac de gaz (20), les moyens de maintien consistant en au moins deux moyens de fixation par prise (16, 17) complémentaires, fixés respectivement à chaque partie de boîtier (14, 15), qui, lors de l'assemblage des parties de boîtier (14, 15) pendant le montage, s'assemblent et se ferment automatiquement dans une position de verrouillage, **caractérisé en ce que** les moyens de fixation par prise, lors de l'allumage du générateur (12) et du gonflement du sac de gaz (20) qui en résulte, ne sont pas séparables les uns des autres, que cependant au moins un des moyens de fixation par prise (16, 17) présente au moins une zone de rupture (18), dont la force de rupture est adaptée à la pression produite lors de l'allumage du générateur (12), que la zone de rupture (18) est détruite par le sac de gaz (20) en train de se gonfler, de sorte que les parties de boîtier (14, 15) s'éloignent l'une de l'autre et libèrent le sac de gaz (20) pour qu'il se gonfle dans son entourage, moyennant quoi les moyens de fixation par prise consistent en un étrier (16) s'étendant dans une direction périphérique et fixé à une partie (14) du boîtier par l'intermédiaire de la zone de rupture (18) et en un pêne de verrouillage (17), muni d'une rampe à plan incliné (19), ajusté à l'étrier (16), et fixé à une autre partie (15) du boîtier.

2. Module pour airbag selon la revendication 1, **caractérisé en ce que** les moyens de fixation par prise (16, 17) sont, dans la position de verrouillage, disposés les uns par rapport aux autres et par rapport aux parties de boîtier (14, 15) ou par rapport à des pièces prévues sur ces dernières (15', 15"), et **en ce qu'**ils sont maintenus les uns contre les autres après la rupture de la zone de rupture (18).

3. Module pour airbag selon les revendications 1 et 2, **caractérisé en ce que** l'étrier (16) est protégé contre une éjection après rupture de la zone de rupture (18), sur le côté opposé au pêne de verrouillage (17), par une pièce de recouvrement (15') de la partie de boîtier appartenant au pêne de verrouillage (17).

4. Module pour airbag selon l'une quelconque des revendications précédentes, **caractérisé en ce qu'**un support de générateur (11) sensiblement cylindrique muni d'éclisses de fixation (21), dans lequel un générateur (12) est logé, est logé avec le sac de gaz (20) qui l'entoure, dans un boîtier de forme cylindrique (13), qui se compose de deux moitiés de boîtier (14, 15), reliées l'une à l'autre avec possibilité d'ouverture au moyen d'une articulation (22) le long d'une génératrice du cylindre, et **en ce que**, sur le côté diamétralement opposé à l'articulation (22), sont disposés sur les moitiés de boîtier (14, 15), avec un écartement axial, plusieurs et de préférence deux moyens de maintien (16, 17).
